# EUROPÄISCHE PATENTSCHRIFT

(11) **EP 0 679 495 B1**
(45) Veröffentlichungstag und Bekanntmachung des Hinweises auf die Patenterteilung: **23.09.1998**
(21) Anmeldenummer: 95105939.3
(22) Anmeldetag: 20.04.1995
(51) Int. Cl.: B29C 47/08, B30B 11/24

(54) **Getriebe für Doppelschnecken-Extruder**
Drive for a double-screw extruder
Transmission pour extrudeuse à deux vis

(30) Priorität: 22.04.1994 DE 4414098
(43) Veröffentlichungstag der Anmeldung: 02.11.1995
(73) Patentinhaber: Weber, Johannes, Dr.-Ing., D-96317 Kronach (DE)
(72) Erfinder: Weber, Johannes, Dr.-Ing., D-96317 Kronach (DE)
(74) Vertreter: Schaumburg, Thoenes, Thurn Patentanwälte

(56) Entgegenhaltungen:
- DE-A- 2 559 135
- DE-A- 3 119 305
- DATABASE WPI Section Ch, Week 8609 17.März 1986 Derwent Publications Ltd., London, GB; Class A32, AN 86-061031 & SU-A-1 172 737 (UKR PLASTIC RESIN) , 15.August 1985
- PATENT ABSTRACTS OF JAPAN vol. 7 no. 112 (M-215) ,17.Mai 1983 & JP-A-58 034254 (TAKASHI TAKAHASHI) 28.Februar 1983,

## Beschreibung

Die Erfindung betrifft ein Getriebe, insbesondere für einen Doppelschneckenextruder mit gleich- oder gegenlaufenden Schnecken, umfassend eine Antriebswelle und mindestens eine Abtriebswelle, die von der Antriebswelle über mindestens ein auf dieser sitzendes schrägverzahntes Antriebsrad und mindestens ein auf der Abtriebswelle sitzendes schrägverzahntes Abtriebsrad antreibbar ist.

Ein solches Getriebe ist beispielsweise aus der US-A-3,766,797 bekannt. Bei Doppelschneckenextrudern wird üblicherweise eine der Abtriebswellen direkt und die andere über ein Getriebe angetrieben. Dabei müssen hohe Drehmomente übertragen werden. Wegen des geringen radialen Abstandes der beiden Abtriebswellen kann das erforderliche hohe Drehmoment nicht durch direkte Kraftübertragung von der angetriebenen Welle auf die mitlaufende Welle übertragen werden. Vielmehr muß ein Getriebe zwischengeschaltet werden, das bei den erforderlichen Drehmomenten häufig sehr viel Platz beansprucht.

Der Erfindung liegt die Aufgabe Zugrunde, ein Getriebe der eingangs genannten Art so auszubilden, daß es auf engem Raum eine Übertragung hoher Drehmomente ermöglicht.

Diese Aufgabe wird erfindungsgemäß dadurch gelöst, daß das Antriebsrad und das Abtriebsrad gleichzeitig mit mindestens zwei frei drehbar gelagerten, axial beweglichen und schrägverzahnten Zwischenrädern in Eingriff stehen, die jeweils an der treibenden und der getriebenen Zahnflanke verschiedene Schrägungswinkel haben, und daß jedem Zwischenrad eine Axialkraftausgleichsvorrichtung zum Übertragen einer Axialkraft auf dieses Zwischenrad zugeordnet ist.

Durch die Verwendung von Zwischenrädern wird das von der Antriebswelle auf die Abtriebswelle zu übertragende Drehmoment aufgeteilt, so daß die Belastung der Zahnflanken des Antriebsrades und des Abtriebsrades vermindert wird. Dadurch tritt jedoch in der Praxis aus fertigungstechnischen Gründen das Problem auf, daß die Last nicht gleichmäßig auf die beiden Zwischenräder verteilt wird. Dieses in der Praxis kaum zu vermeidende Problem wird erfindungsgemäß dadurch gelöst, daß durch das Vorsehen unterschiedlicher Schrägungswinkel an der treibenden und der getriebenen Zahnflanke jedes Zahnes der Zwischenräder bei einer Drehmomentübertragung zwischen Antriebswelle und Abtriebswelle eine auf die Zwischenräder wirkende Axialkraft entsteht. Bei einer Belastung in Umfangsrichtung versucht also das Zwischenrad in axialer Richtung auszuweichen. Umgekehrt besteht dadurch die Möglichkeit, durch das Ausüben einer entgegengesetzten Axialkraft, das Zwischenrad in einer bestimmten Lage zu halten und damit die Übertragung eines vorgegebenen Drehmomentes durch dieses Zwischenrad zu gewährleisten. Auf die beiden Zwischenräder bezogen ergibt sich dadurch die Möglichkeit eines Lastausgleiches zwischen den über die beiden Zwischenräder führenden Übertragungswegen, so daß das zu übertragende Drehmoment gleichmäßig auf die beiden Übertragungswege verteilt wird und damit eine gleichmäßige Belastung der Zwischenräder sowie des Antriebsrades und des Abtriebrades erreicht wird.

Die Zahnschrägungswinkel der Zwischenräder sind zweckmäßigerweise untereinander gleich. Um die durch die Schrägverzahnung auftretende Axialkraftkomponente an sämtlichen beteiligten Zahnrädern auszugleichen, können in an sich bekannter Weise je zwei gegensinnig schräg verzahnte Antriebs- und Abtriebsräder vorgesehen sein, denen jeweils paarweise mindestens zwei entsprechend schräg verzahnte Zwischenräder zugeordnet sind.

Die Axialkraftausgleichsvorrichtung kann einzeln für jedes Zwischenrad gesteuert werden. Eine bevorzugte Ausführungsform sieht vor, daß die Axialkraftausgleichsvorrichtungen der einem Antriebs- und Abtriebsradpaar zugeordneten Zwischenräder so gekoppelt sind, daß sie einen Lastausgleich zwischen den Zwischenrädern bewirken. Ein solcher Lastausgleich läßt sich beispielsweise dadurch erreichen, daß die Axialkraftausgleichsvorrichtung einen schwenkbar gelagerten zweiarmigen Hebel hat, der mit je einem seiner beiden gleich langen Hebelarme an einem Zwischenrad angreift. Wird eines der Zwischenräder stärker belastet als das andere, so versucht es dieser hohen Belastung durch eine axiale Bewegung auszuweichen. Dadurch verschwenkt es den Hebel, welcher das andere Zwischenrad in der entgegengesetzten Richtung axial verschiebt, so daß dieses einen höheren Anteil des Drehmomentes überträgt und damit stärker belastet wird. Auf diese Weise gleicht sich die Belastung der beiden Zwischenräder selbsttätig aus.

Die Kraftübertragung in den Axialkraftausgleichsvorrichtungen kann jedoch auch beispielsweise hydraulisch erfolgen und zwar sowohl bei einer Kopplung der Axialkraftausgleichsvorrichtungen als auch bei einzeln wirkenden Ausgleichsvorrichtungen.

Es kann auch vorgesehen sein, daß die erzeugte Axialkraft gegen ein elastisches System, z.B. eine vorgespannte Feder arbeitet. Gibt das elastische System nach, wirkt es somit als Lastbegrenzung oder Überlastungsschutz.

Die erfindungsgemäß vorgeschlagene Lösung zum Lastausgleich zwischen den Zwischenrädern läßt sich auch vorteilhaft bei einem Planetenradgetriebe anwenden, bei dem eine der beiden Wellen mit dem Sonnenrad und die andere mit dem Hohlrad verbunden ist, während die Planetenräder die Zwischenräder bilden, an denen die Axialkraftausgleichsvorrichtungen angreifen. Hierdurch sind Anordnungen mit mehr als drei Planetenrädern möglich, die dann gleichmäßig belastet sind. Dadurch können bei gleicher Baugröße höhere Drehmomente übertragen werden.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Es zeigen:
- Figur 1: eine schematische teilweise geschnittene Draufsicht auf das erfindungsgemäße Getriebe,
- Figur 2: eine schematische axiale Ansicht der miteinander kämmenden Zahnräder des erfindungsgemäßen Getriebes,
- Figur 3: eine schematische Darstellung der Zwischenräder und der an ihnen angreifenden Axialkraftausgleichsvorrichtungen und
- Figur 4: eine schematische Darstellung zur Erläuterung der Schrägungswinkel der Zahnflanken an den Zwischenrädern.

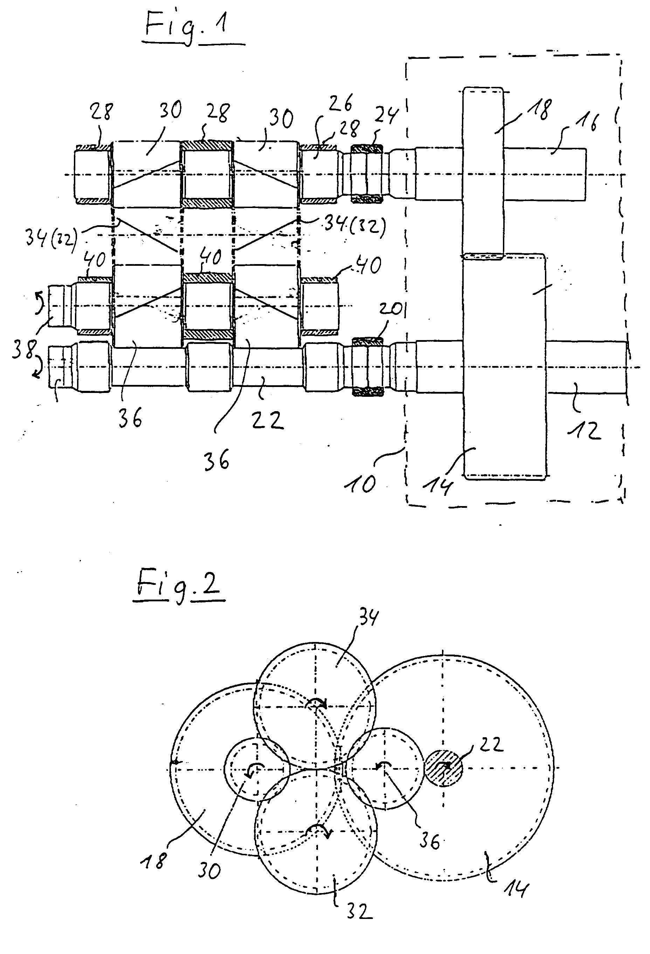

Das in Figur 1 dargestellte Getriebe für gegensinnig drehende Abtriebswellen umfaßt einen allgemein mit 10 bezeichneten Getriebeblock mit einer ersten Welle 12, die von einem nicht dargestellten Motor her antreibbar ist. Auf der ersten Welle 12 sitzt ein Stirnzahnrad 14, das mit einem auf einer zweiten Welle 16 des Getriebeblockes sitzenden Stirnzahnrad 18 kämmt.

Die erste Welle 12 ist über eine Wellenkupplung 20 mit einer Abtriebswelle 22 eines Doppelschneckenextruders gekoppelt, um diese direkt anzutreiben. Die zweite Welle 16 ist über eine Wellenkupplung 24 mit einer Zwischenwelle 26 gekoppelt, welche die Funktion der oben genannten Antriebswelle hat und in Lagern 28 gelagert ist. Die Zwischenwelle 26 trägt zwei gegensinnig schräg verzahnte Antriebsräder 30. Diese kämmen jeweils mit zwei entsprechend schräg verzahnten Zwischenrädern 32, 34, die in Figur 1 übereinander angeordnet sind, wie dies Figur 2 zeigt. Die Zwischenräder 32, 34 sind frei drehbar gelagert, axial beweglich und stehen nicht in Eingriff miteinander. Jedes Zwischenradpaar 32, 34 kämmt mit einem schrägverzahnten Abtriebsrad 36, das auf der zweiten Schneckenwelle 38 des Doppelschneckenextruders sitzt, die in Lagern 40 gelagert ist.

Die Figur 2 zeigt in schematischer Weise den gegenseitigen Eingriff der Zahnräder der soweit beschriebenen Getriebeanordnung, wobei die Pfeile jeweils die relative Drehrichtung der Räder angeben.

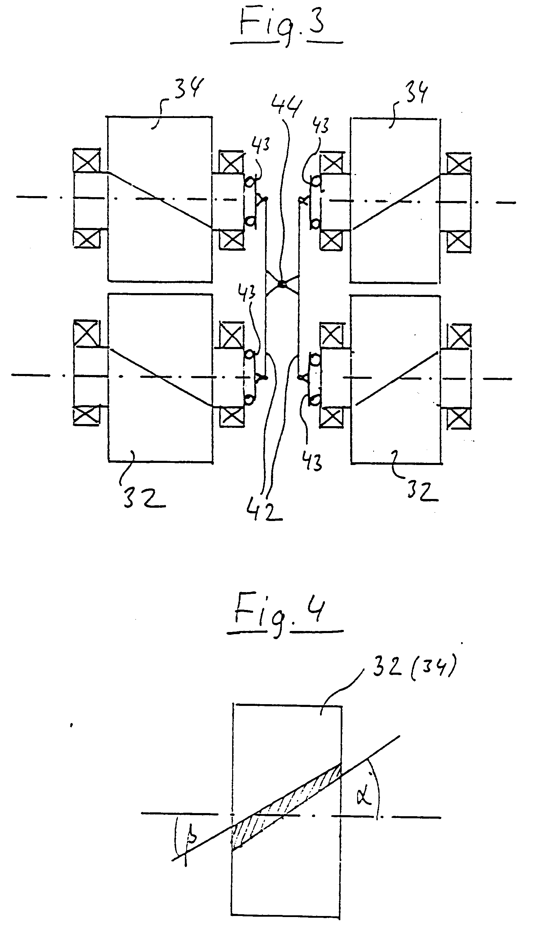

Erfindungsgemäß sind die Zwischenräder 32 und 34 so schräg verzahnt, daß die Schrägungswinkel der beiden Zahnflanken ein und desselben Zahnes eines Zwischenrades unterschiedliche Schrägungswinkel haben. Dies ist in Figur 4 schematisch dargestellt. Die Schrägungswinkel α und β der beiden Zahnflanken sind erfindungsgemäß ungleich. Die eine dieser Flanken wird beim Eingriff mit dem jeweiligen Antriebsrad 30 belastet (angetriebene Flanke), während die andere Flanke beim Eingriff mit dem Abtriebsrad 36 belastet wird (antreibende Flanke). Durch den Unterschied zwischen dem Schrägungswinkeln α, β der beiden Flanken entsteht bei der Übertragung eines Drehmomentes eine auf das jeweilige Zwischenrad 32, 34 wirkende Axialkraftkomponente. Im Idealfall wird das von der Zwischenwelle 26 auf die Schneckenwelle 38 übertragene Drehmoment jeweils gleichförmig auf die Zwischenräder 32, 34 eines Zwischenradpaares aufgeteilt, so daß die beiden Zwischenräder 32, 34 gleichmäßig belastet werden. Dieser Idealfall tritt in der Praxis aus verschiedenen Gründen nicht auf, so daß die angestrebte gleichförmige Belastung nicht erreicht wird.

Um diese unterschiedliche Belastung auszugleichen ist eine Axialkraftausgleichsvorrichtung vorgesehen, die in dem dargestellten Ausführungsbeispiel jeweils einen zweiarmigen Hebel 42 umfaßt, der an seinem längsten Mittelpunkt um eine Achse 44 schwenkbar gelagert ist, die senkrecht zu einer durch die Achsen eines Zwischenradpaares 32, 34 gelegten Ebene ist. Der Hebel 42 greift mit den Enden seiner beiden Hebelarme jeweils über ein nur schematisch angedeutetes Axiallager 43 an einem Zwischenrad 32, 34 eines Zwischenradpaares an. Die axiale Bewegung eines Zwischenrades führt über den Hebel 42 zwangsläufig zu einer entgegengesetzten axialen Bewegung des jeweils anderen Zwischenrades eines Zwischenradpaares 32, 34. Wird also ein Zwischenrad eines Zwischenradpaares 32, 34 aufgrund einer höheren Belastung axial ausgelenkt, so wird dadurch das andere Zwischenrad über den Hebel 42 automatisch in der entgegengesetzten Richtung axial verschoben und übernimmt damit einen höheren Teil des zu übertragenden Drehmomentes, so daß damit ein Lastausgleich zwischen den beiden Zwischenrädern erfolgt. Der Hebel 42 bewirkt also, daß sich die Zwischenräder in ihrer axialen Stellung so ausbalancieren, daß ein Lastausgleich zwischen den beiden Zwischenrädern erfolgt und somit das zu übertragende Drehmoment gleichförmig auf die beiden Übertragungswege aufgeteilt wird. Anstelle eines rein mechanischen Lastausgleiches kann auch eine hydraulisch wirkende Axialkraftausgleichsvorrichtung vorgesehen sein. Der Lastausgleich kann auch über eine indirekte Kupplung der Ausgleichsvorrichtungen erfolgen, indem beispielsweise die Auslenkung des einen Zwischenrades erfaßt und aufgrund des erfaßten Wertes beide Ausgleichsvorrichtungen so angesteuert werden, daß die Zwischenräder eines Zwischenradpaares wieder gleichförmig belastet werden.

## Patentansprüche

1. Getriebe, insbesondere für einen Doppelschneckenextruder mit gleich- oder gegenlaufenden Schnecken, umfassend eine Antriebswelle (26) und mindestens eine Abtriebswelle (38), die von der Antriebswelle (26) über mindestens ein auf dieser sitzendes schrägverzahntes Antriebsrad (30) und mindestens ein auf der Abtriebswelle (38) sitzendes schrägverzahntes Abtriebsrad (36) antreibbar ist, dadurch **gekennzeichnet**, daß das Antriebsrad (30) und das Abtriebsrad (36) gleichzeitig mit mindestens zwei frei drehbar gelagerten, axial beweglichen und schrägverzahnten Zwischenrädern (32, 34) in Eingriff stehen, die jeweils an der treibenden und der getriebenen Zahnflanke verschiedene Schrägungswinkel (α, β) haben, und daß jedem Zwischenradpaar (32, 34) eine Axialkraftausgleichsvorrichtung (42) zum Übertragen einer Axialkraft auf dieses Zwischenrad (32, 34) zugeordnet ist.

2. Getriebe nach Anspruch 1, dadurch **gekennzeichnet**, daß die Zahnschrägungswinkel (α, β) der Zwischenräder (32, 34) untereinander gleich sind.

3. Getriebe nach Anspruch 1 oder 2, dadurch **gekennzeichnet**, daß das Antriebsrad (30) und das Abtriebsrad (36) pfeilverzahnt sind.

4. Getriebe Anspruch 1 oder 2, dadurch **gekennzeichnet**, daß je zwei gegensinnig schräg verzahnte Antriebs- und Abtriebsräder (30, 36) vorgesehen sind, denen jeweils paarweise mindestens zwei Zwischenräder (32, 34) zugeordnet sind.

5. Getriebe nach einem der Ansprüche 1 bis 4, dadurch **gekennzeichnet**, daß die Axialkraftausgleichsvorrichtungen (42) der einem Antriebs- oder Abtriebsradpaar (30, 36) zugeordneten Zwischenräder (32, 34) so gekoppelt sind, daß sie einen Lastausgleich zwischen diesen Zwischenrädern (32, 34) bewirken.

6. Getriebe nach einem der Ansprüche 1 bis 5, dadurch **gekennzeichnet**, daß die Axialkraftausgleichsvorrichtung eine hydraulische Kraftübertragung hat.

7. Getriebe nach einem der Ansprüche 1 bis 5, dadurch **gekennzeichnet**, daß die Axialkraftausgleichsvorrichtung einen schwenkbar gelagerten zweiarmigen Hebel (42) hat, der mit je einem seiner beiden gleich langen Hebelarme an einem Zwischenrad (32, 34) angreift.

8. Getriebe nach einem der Ansprüche 1 bis 7, dadurch **gekennzeichnet**, daß es als Planetenradgetriebe mit mehr als drei Planetenrädern ausgebildet ist, wobei eine der Wellen mit dem Sonnenrad und die andere Welle mit dem Hohlrad verbunden ist und wobei die Planetenräder die Zwischenräder bilden.

## Claims

1. Gear, in particular for a twin-screw extruder having screws running in the same or opposite directions, comprising a drive shaft (26) and at least one driven shaft (38), which can be driven by the drive shaft (26) via at least one helical gear drive wheel (30) sitting on the latter and at least one helical gear driven wheel (36) sitting on the driven shaft (38), characterised in that the drive wheel (30) and the driven wheel (36) engage simultaneously with at least two freely rotatably mounted, axially movable and helical gear intermediate wheels (32, 34) which have different helix angles (α, β) at both the driving and the driven tooth flank, and in that an axial-load compensating device (42) is assigned to each intermediate wheel (32, 34) to transfer an axial load to this intermediate wheel (32, 34).

2. Gear according to claim 1, characterised in that the tooth helix angle (α, β) of the intermediate wheels (32, 34) are equal to one another.

3. Gear according to claim 1 or 2, characterised in that the drive wheel (30) and the driven wheel (36) have double helical gearing.

4. Gear according to claim 1 or 2, characterised in that in each case two helical gear drive and driven wheels (30, 36) running in opposite directions are provided, to which in each case at least two intermediate wheels (32, 34) are assigned in pairs.

5. Gear according to one of claims 1 to 4, characterised in that the axial-load compensating devices (42) of the intermediate wheels (32, 34) assigned to a drive or driven wheel pair (30, 36) are coupled so that they effect load compensation between these intermediate wheels (32, 34).

6. Gear according to one of claims 1 to 5, characterised in that the axial-load compensating device has hydraulic load transmission.

7. Gear according to one of claims 1 to 5, characterised in that the axial-load compensating device has a pivotably mounted double-armed lever (42), which acts on an intermediate wheel (32, 34) with each of its two equally long lever arms.

8. Gear according to one of claims 1 to 7, characterised in that it is designed as a planet wheel gear having more than three planet wheels, wherein one of the shafts is connected to the sun wheel and the other shaft to the ring gear, and wherein the planet wheels form the intermediate wheels.

## Revendications

1. Transmission, pour une extrudeuse à deux vis munie de vis tournant dans le même sens ou en sens contraire en particulier, comportant un arbre moteur (26) et au moins un arbre de sortie (38), qui peut être entraîné par l'arbre moteur (26) par l'intermédiaire d'au moins un pignon menant (30) à denture hélicoïdale, reposant sur ce dernier, et d'au moins un pignon mené (36) à denture hélicoïdale, reposant sur l'arbre de sortie (38), caractérisée en ce que le pignon menant (30) et le pignon mené (36) sont simultanément en prise avec au moins deux pignons intermédiaires (32, 34) à denture hélicoïdale, logés avec une libre possibilité de rotation, mobiles dans le sens axial, et présentant respectivement différents angles d'hélice (α, β) sur le flanc de dent menant et mené, et en ce qu'un dispositif d'équilibrage des forces axiales (42) est associé à chaque pignon intermédiaire (32, 34), pour transmettre une force axiale à ce pignon (32, 34).

2. Transmission suivant la revendication 1, caractérisée en ce que les angles d'hélice (α, β) des pignons intermédiaires (32, 34) sont égaux entre eux.

3. Transmission suivant l'une des revendications 1 et 2, caractérisée en ce que le pignon menant (30) et le pignon mené (36) ont une denture à chevrons.

4. Transmission suivant l'une des revendications 1 et 2, caractérisée en ce que deux pignons menants et menés (30, 36) à denture hélicoïdale de sens contraire sont respectivement prévus, auxquels sont respectivement associés, par paire, deux pignons intermédiaire (32, 34), au moins.

5. Transmission suivant l'une des revendications 1 à 4, caractérisée en ce que les dispositifs d'équilibrage des forces axiales (42) des pignons intermédiaires (32, 34), associés à une paire de pignons menants ou menés (30, 36), sont couplés de sorte qu'ils provoquent une répartition des charges entre ces pignons intermédiaires (32, 34).

6. Transmission suivant l'une des revendications 1 à 5, caractérisée en ce que le dispositif d'équilibrage des forces axiales présente un mécanisme de transmission hydraulique.

7. Transmission suivant l'une des revendications 1 à 5, caractérisée en ce que le dispositif d'équilibrage des forces axiales présente un levier à deux bras (42), logé avec une possibilité de pivotement et attaquant par l'un de ses deux bras, de longueur égale, un pignon intermédiaire (32, 34).

8. Transmission suivant l'une des revendications 1 à 7, caractérisée en ce qu'elle est réalisée sous forme d'engrenage planétaire avec plus de trois pignons satellites, l'un des arbres étant assemblé avec la roue solaire, et l'autre arbre avec la couronne de train planétaire, et les pignons satellites formant les pignons intermédiaires.
